# EUROPEAN PATENT APPLICATION

(11) **EP 4 142 258 A1**
(43) Date of publication of application: **01.03.2023**
(21) Application number: 22180455.2
(22) Date of filing: 22.06.2022
(51) Int. Cl.: H04L 67/1019, H04L 67/1097, H04L 67/568, H04L 65/611, H04L 67/10

(54) **EDGE COMPUTING NETWORK, DATA TRANSMISSION METHOD AND APPARATUS, DEVICE AND STORAGE MEDIUM**

(30) Priority: 24.08.2021 CN 202110974867
(71) Applicant: BEIJING BAIDU NETCOM SCIENCE AND TECHNOLOGY CO. LTD., 100085 Beijing (CN)
(72) Inventor: SHAN, Tengfei, Beijing, 100085 (CN)
(74) Representative: dompatent von Kreisler Selting Werner - Partnerschaft von Patent- und Rechtsanwälten mbB

(57) **Abstract**

The present disclosure provides an edge computing network, a data transmission method and apparatus, a device and a storage medium, and relates to the field of data transmission technologies, and particularly to the field of technologies, such as cloud computing technologies, edge computing technologies, streaming media technologies, or the like. The edge computing network includes: a first edge node configured to receive streaming media data sent by a first client, store the streaming media data onto a first storage resource, and store information of the first storage resource onto a second storage resource, both the first storage resource and the second storage resource being located in the edge computing network; and a second edge node configured to receive a request sent by a second client, acquire the information of the first storage resource from the second storage resource, acquire the streaming media data from the first storage resource based on the information of the first storage resource, and send the streaming media data to the second client. A transmission efficiency of the streaming media data may be improved in the present disclosure.

## Description

### Field of the Disclosure

The present disclosure relates to the field of data transmission technologies, and particularly relates to the field of technologies, such as cloud computing technologies, edge computing technologies, streaming media technologies, or the like, and particularly to an edge computing network, a data transmission method and apparatus, a device and a storage medium.

### Background of the Disclosure

Streaming media refers to a technology and process of compressing a series of media data, sending the data in segments over the Internet, and transmitting video and audio on the Internet in real time for viewing.

In a related art, the transmission architecture of the streaming media is a central architecture; that is, streaming media data at one side is transmitted to the other side through a streaming media center.

### Summary of the Disclosure

The present disclosure provides an edge computing network, a data transmission method and apparatus, a device and a storage medium.

According to one aspect of the present disclosure, there is provided an edge computing network, including: a first edge node configured to receive streaming media data sent by a first client, store the streaming media data onto a first storage resource, and store information of the first storage resource onto a second storage resource, both the first storage resource and the second storage resource being located in the edge computing network; and a second edge node configured to receive a request sent by a second client for acquiring the streaming media data, acquire the information of the first storage resource from the second storage resource, acquire the streaming media data from the first storage resource based on the information of the first storage resource, and send the streaming media data to the second client.

According to another aspect of the present disclosure, there is provided a data transmission method applied to a first edge node of an edge computing network, the method including: receiving streaming media data sent by a first client; storing the streaming media data onto a first storage resource; and storing information of the first storage resource onto a second storage resource, both the first storage resource and the second storage resource being located in the edge computing network.

According to another aspect of the present disclosure, there is provided a data transmission method applied to a second edge node of an edge computing network, the method including: receiving a request sent by a second client for acquiring streaming media data; responding to the request to acquire information of a first storage resource from a second storage resource, the first storage resource being configured to store the streaming media data; acquiring the streaming media data from the first storage resource based on the information of the first storage resource; and sending the streaming media data to the second client.

According to another aspect of the present disclosure, there is provided a data transmission apparatus applied to a first edge node of an edge computing network, the apparatus including: a receiving module configured to receive streaming media data sent by a first client; a first storage module configured to store the streaming media data onto a first storage resource; and a second storage module configured to store information of the first storage resource onto a second storage resource, both the first storage resource and the second storage resource being located in the edge computing network.

According to another aspect of the present disclosure, there is provided a data transmission apparatus applied to a second edge node of an edge computing network, the apparatus including: a receiving module configured to receive a request sent by a second client for acquiring streaming media data; a first acquiring module configured to respond to the request to acquire information of a first storage resource from a second storage resource, the first storage resource being configured to store the streaming media data; a second acquiring module configured to acquire the streaming media data from the first storage resource based on the information of the first storage resource; and a sending module configured to send the streaming media data to the second client.

According to another aspect of the present disclosure, there is provided an electronic device, including: at least one processor; and a memory connected with the at least one processor communicatively, wherein the memory stores instructions executable by the at least one processor to enable the at least one processor to perform the method according to any one of the above-mentioned aspects.

According to another aspect of the present disclosure, there is provided a non-transitory computer readable storage medium with computer instructions stored thereon, wherein the computer instructions are used for causing a computer to perform the method according to any one of the above-mentioned aspects.

According to another aspect of the present disclosure, there is provided a computer program product including a computer program which, when executed by a processor, implements the method according to any one of the above-mentioned aspects.

The technical solution according to the present disclosure may improve a transmission efficiency of the streaming media data.

It should be understood that the statements in this section are not intended to identify key or critical features of the embodiments of the present disclosure, nor limit the scope of the present disclosure. Other features of the present disclosure will become apparent from the following description.

### Brief Description of Drawings

The drawings are used for better understanding the present solution and do not constitute a limitation of the present disclosure. In the drawings,
Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a schematic diagram according to a fourth embodiment of the present disclosure;
Fig. 5 is a schematic diagram according to a fifth embodiment of the present disclosure;
Fig. 6 is a schematic diagram according to a sixth embodiment of the present disclosure;
Fig. 7 is a schematic diagram according to a seventh embodiment of the present disclosure; and
Fig. 8 is a schematic diagram of an electronic device configured to implement any of data transmission methods according to the embodiments of the present disclosure.

### Detailed Description of Preferred Embodiments

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

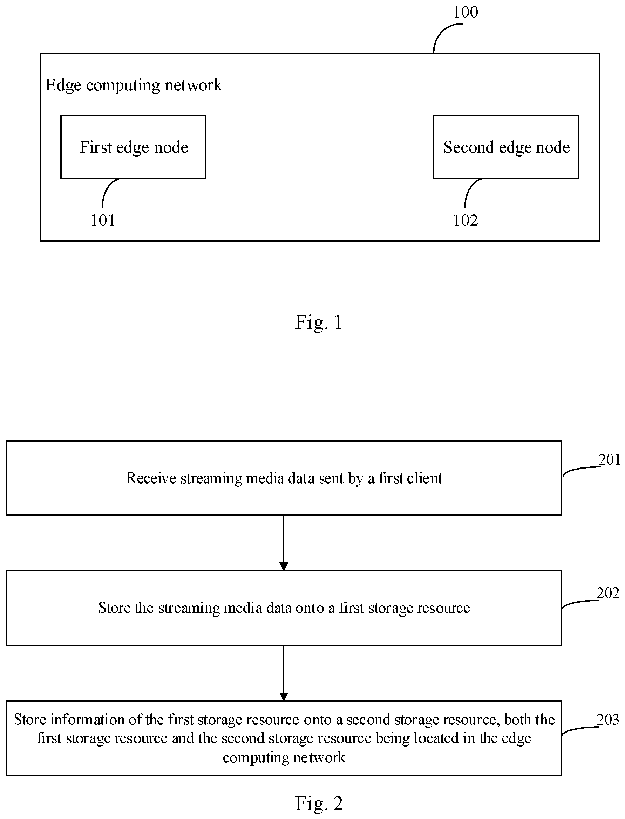

Fig. 1 is a schematic diagram according to a first embodiment of the present disclosure, which provides an edge computing network.

As shown in Fig. 1, the edge computing network 100 according to the present embodiment includes: a first edge node 101 and a second edge node 102.

The first edge node 101 is configured to receive streaming media data sent by a first client, store the streaming media data onto a first storage resource, and store information of the first storage resource onto a second storage resource, both the first storage resource and the second storage resource being located in the edge computing network; and the second edge node 102 is configured to receive a request sent by a second client for acquiring the streaming media data, acquire the information of the first storage resource from the second storage resource, acquire the streaming media data from the first storage resource based on the information of the first storage resource, and send the streaming media data to the second client.

In the present embodiment, the streaming media data sent by the first client is forwarded to the second client by the first edge node and the second edge node in the edge computing network, thereby transmitting the streaming media data based on the edge computing network, realizing decoupling from a streaming media center, and improving a transmission efficiency of the streaming media data.

In some embodiments, the network 100 further includes a first gateway configured to receive the streaming media data sent by the first client; and determine the first edge node randomly and send the streaming media data to the first edge node.

In some embodiments, the network 100 further includes a second gateway configured to receive the request sent by the second client; and determine the second edge node randomly and send the request to the second edge node.

In some embodiments, the first edge node is further configured to determine information of the second storage resource based on a streaming media identifier included in the streaming media data using a first determination method; the second edge node is further configured to determine the information of the second storage resource based on the streaming media identifier included in the streaming media data using a second determination method; and the first determination method is the same as the second determination method.

In some embodiments, identification information is a stream number of the streaming media data, the information of the second storage resource is a number corresponding to the second storage resource, and the first edge node and the second edge node are specifically configured to: perform a Hash operation on the stream number to determine a Hash value corresponding to the stream number; and take a quantity of the storage resources in the edge computing network as a module, perform a modulo operation on the Hash value to obtain a remainder, and take the remainder as the number corresponding to the second storage resource.

For details, reference may be made to subsequent related descriptions.

In the embodiment of the present disclosure, the streaming media data sent by the first client is forwarded to the second client by the edge nodes in the edge computing network, thereby transmitting the streaming media data based on the edge computing network, realizing decoupling from the streaming media center, and improving the transmission efficiency of the streaming media data.

Based on the network architecture, the embodiment of the present disclosure may further provide a data transmission method.

Fig. 2 is a schematic diagram according to a second embodiment of the present disclosure, the present embodiment provides a data transmission method applied to a first edge node of an edge computing network, and the method includes:
201: receiving streaming media data sent by a first client.
202: storing the streaming media data onto a first storage resource.
203: storing information of the first storage resource onto a second storage resource, both the first storage resource and the second storage resource being located in the edge computing network.

In the present embodiment, the streaming media data sent by the first client is stored onto the first storage resource of the edge computing network by the first edge node in the edge computing network, such that in a subsequent process, the streaming media data may be forwarded to a second client from the edge computing network, thereby transmitting the streaming media data based on the edge computing network, realizing decoupling from a streaming media center, and improving a transmission efficiency of the streaming media data.

In some embodiments, the streaming media data includes a streaming media identifier, and the storing information of the first storage resource onto a second storage resource includes: determining information of the second storage resource based on the streaming media identifier; and storing the information of the first storage resource onto the second storage resource based on the information of the second storage resource.

In some embodiments, identification information is a stream number of the streaming media data, the information of the second storage resource is a number corresponding to the second storage resource, and the determining information of the second storage resource based on the streaming media identifier includes: performing a Hash operation on the stream number to determine a Hash value corresponding to the stream number; and taking a quantity of the storage resources in the edge computing network as a module, performing a modulo operation on the Hash value to obtain a remainder, and taking the remainder as the number corresponding to the second storage resource.

For details, reference may be made to subsequent related descriptions.

In the embodiment of the present disclosure, the first edge node in the edge computing network stores the streaming media data sent by the first client onto the first storage resource, and stores the information of the first storage resource onto the second storage resource, such that in the subsequent process, a second edge node in the edge computing network acquires the streaming media data from the first storage resource and sends the streaming media data to the second client, thereby transmitting the streaming media data based on the edge computing network, realizing decoupling from the streaming media center, and improving the transmission efficiency of the streaming media data.

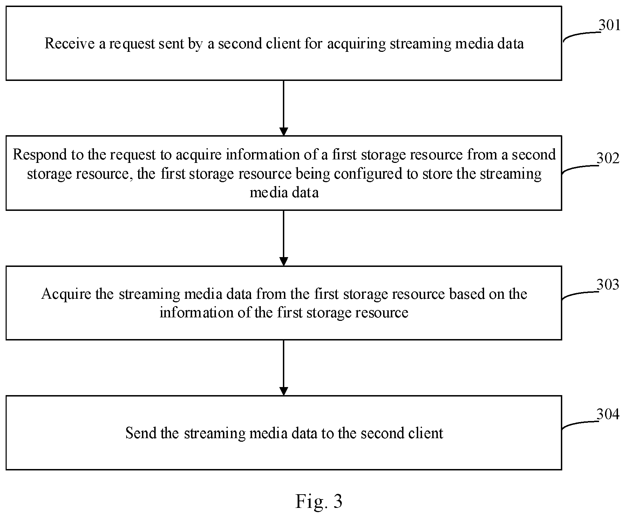

Fig. 3 is a schematic diagram according to a third embodiment of the present disclosure, the present embodiment provides a data transmission method applied to a second edge node of an edge computing network, and the method includes:
301: receiving a request sent by a second client for acquiring streaming media data;
302: responding to the request to acquire information of a first storage resource from a second storage resource, the first storage resource being configured to store the streaming media data;
303: acquiring the streaming media data from the first storage resource based on the information of the first storage resource; and
304: sending the streaming media data to the second client.

In the present embodiment, the second edge node in the edge computing network acquires the streaming media data from the first storage resource of the edge computing network, and sends the streaming media data to the second client, thereby transmitting the streaming media data based on the edge computing network, realizing decoupling from a streaming media center, and improving a transmission efficiency of the streaming media data.

In some embodiments, the request includes a streaming media identifier, and the acquiring information of a first storage resource from a second storage resource includes:
determining information of the second storage resource based on the streaming media identifier; and
acquiring the information of the first storage resource from the second storage resource based on the information of the second storage resource.

In some embodiments, the determining information of the second storage resource based on the streaming media identifier includes: performing a Hash operation on a stream number to determine a Hash value corresponding to the stream number; and taking a quantity of the storage resources in the edge computing network as a module, performing a modulo operation on the Hash value to obtain a remainder, and taking the remainder as a number corresponding to the second storage resource.

For details, reference may be made to subsequent related descriptions.

In the embodiment of the present disclosure, the second edge node in the edge computing network acquires the information of the first storage resource, acquires the streaming media data from the first storage resource based on the information of the first storage resource, and sends the streaming media data the second client, thereby transmitting the streaming media data based on the edge computing network, realizing decoupling from the streaming media center, and improving the transmission efficiency of the streaming media data.

The streaming media data may be applied to many scenarios, such as live broadcast watching scenarios, movie and television play watching scenarios, animation watching scenarios, or the like.

Two endpoints of the transmission of the streaming media data may be referred to as the first client and the second client respectively.

The edge computing network may be a content delivery network (CDN)

The CDN is an intelligent virtual network constructed on a basis of an existing network, and dependent on edge servers deployed in various places, by load balancing modules, content delivery modules, scheduling modules, and other functional modules of a central platform, users may acquire required content nearby, thereby reducing network congestion, and increasing a user access response speed and a hit rate. A key technology of the CDN mainly includes a content storage and delivery technology.

Taking a live scenario as an example, the corresponding streaming media data may be referred to as live streaming data. The first client and the second client may be an anchor side and an audience side respectively.

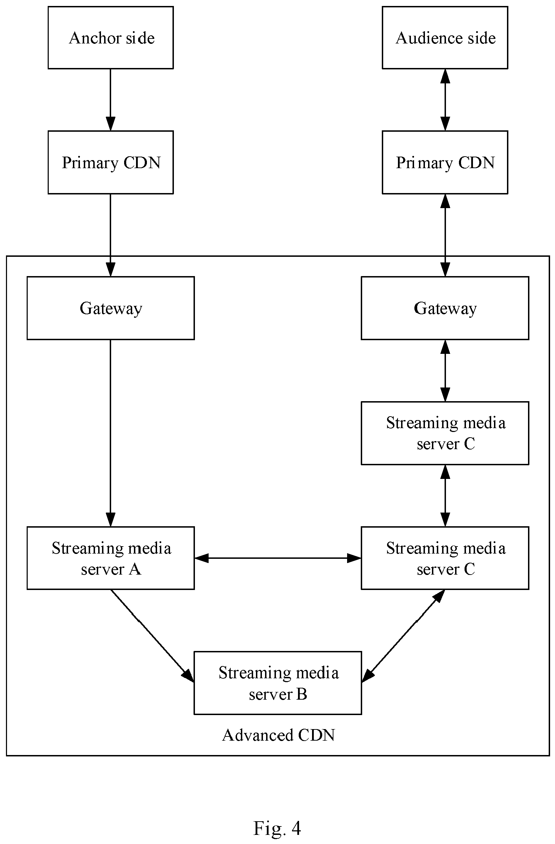

As shown in Fig. 4, in the live scenario, a data transmission architecture may include: an anchor side, an audience side and a CDN. Generally, the CDN is of a multilevel structure, and in the present embodiment, as shown in Fig. 4, the CDN includes a primary CDN and an advanced CDN.

In a related art, the streaming media data is required to pass through the streaming media center (not shown in Fig. 4) during transmission; that is, taking the live streaming data as an example, a transmission path of the live streaming data in the related art is as follows: anchor side—>multilevel CDN—>streaming media center->multilevel CDN->audience side.

All the data passes through the streaming media center, thus causing a transmission bottleneck of the streaming media center and affecting a data transmission efficiency, for example, affecting an above-the-fold effect, and causing delay, lagging, or the like.

In the present embodiment, the streaming media data is transmitted only in the edge computing network (i.e., the CDN), and does not pass through the streaming media center, thereby realizing decoupling from the streaming media center, and solving a problem caused by the streaming media center serving as the bottleneck.

Under the architecture shown in Fig. 4, the first client (i.e., the anchor side) may generate the streaming media data, the streaming media data is transmitted to the gateway in the advanced CDN through the primary CDN of the anchor side, the gateway may be referred to as a first gateway for differentiation, the first gateway may send the streaming media data to one edge node (may be referred to as a first edge node) in the advanced CDN randomly after receiving the streaming media data, and in Fig. 4, as an example, the first gateway sends the streaming media data to a streaming media server A.

The second client (i.e., the audience side) may send a request when needing to watch a live broadcast, the request passes through the primary CDN of the audience side to be transmitted to the gateway in the advanced CDN, the gateway may be referred to as a second gateway for differentiation, the second gateway may send the request to one edge node (may be referred to as a second edge node) in the advanced CDN randomly after receiving the request, and in Fig. 4, as an example, the second gateway sends the request to a streaming media server C.

It may be understood that for achieving a load balancing purpose and other purposes, the gateway corresponding to the audience side may be communicated with the streaming media server by reverse proxy. The reverse proxy may be implemented using various related technologies, which is not described in detail herein.

After receiving the streaming media data, the streaming media server A may determine the information of the second storage resource based on identification information included in the streaming media data.

After receiving the request, the streaming media server C may determine the information of the second storage resource based on the identification information of the streaming media data included in the request.

The second storage resource is configured to store storage location information of the streaming media data, and assuming that the streaming media data is stored onto the first storage resource, the second storage resource is configured to store the information of the first storage resource.

As shown in Fig. 4, assuming that the streaming media data is stored onto the streaming media server A, the storage location information of the streaming media data is stored onto a streaming media server B.

Based on the above example, the streaming media server A may store the streaming media data, information of the streaming media server A may also be stored onto the streaming media server B, and the streaming media server C may obtain information of the streaming media server B, obtain the information of the streaming media server A from the streaming media server B based on the information of the streaming media server B, then obtain the streaming media data from the streaming media server A according to the information of the streaming media server A, and then transmit the obtained streaming media data to the audience side through the reverse proxy, the gateway, and the initial CDN.

The edge computing network may include plural edge nodes, and the edge nodes may be the streaming media servers shown in Fig. 4.

Different storage resources in the edge computing network may be located on the same edge node or different edge nodes.

The storage resources may be allocated on a per-process basis; that is, different storage resources may correspond to different processes. A process is a running activity of a program in a computer on a data set, is a basic unit of resource allocation and scheduling of a system, and is a basis of an operating system structure. In an early process-oriented computer structure, a process is a basic execution entity of a program; in a contemporary thread-oriented computer structure, a process is a container for threads. A program is a description of instructions, data and organization forms thereof, and a process is an entity of a program.

The identification information of the streaming media data may be a stream number, the stream number is used to identify the streaming media data, different streaming media data has different stream numbers, and the stream number may be in a character string form.

When the storage resources correspond to the processes, numbers of the processes may be used as the information of the storage resources to identify different storage resources. For example, if a result determined based on the identification information of the streaming media data is 67, 67 may be used as the information of the second storage resource; that is, the storage resource corresponding to process No. 67 is configured to store the storage location information of the streaming media data, and the storage location information is the information of the second storage resource.

The storage location information of the streaming media data is, for example, a number of a certain process.

The streaming media data sent by the first client is stored in the first edge node in the edge computing network, and the storage location information of the streaming media data is stored in the second edge node in the edge computing network, thus providing relevant data and information for the transmission of the streaming media data through the edge computing network, and improving the transmission efficiency of the streaming media data.

In some embodiments, the streaming media data may include the identification information of the streaming media data, and the first edge node determines, based on the identification information included in the streaming media data, information of the second edge node using a first determination method; the request includes the identification information of the streaming media data, and the second edge node determines, based on the identification information in the request, the information of the second storage resource using a second determination method; the first determination method is the same as the second determination method.

For example, the identification information of the streaming media data is the stream number, the second edge node and the first edge node may determine the information of the second storage resource based on the stream number using the same determination method.

The second edge node and the first edge node determine the information of the second storage resource based on the identification information using the same determination method, thereby guaranteeing the second edge node and the first edge node to determine the same information of the second storage resource, and further obtaining the storage location information of the streaming media data from the correct storage resource.

Further, the above determination method may be a method based on a Hash value and a modulo operation.

In some embodiments, the identification information is the stream number of the streaming media data, the information of the second storage resource is a number of the second storage resource, and the first determination method and the second determination method include: performing a Hash operation on the stream number to determine a Hash value corresponding to the stream number; and taking a quantity of the storage resources in the edge computing network as a module, performing a modulo operation on the Hash value to obtain a remainder, and taking the remainder as the number corresponding to the second storage resource.

The Hash operation may be performed on the stream number using a crc32 algorithm to obtain the corresponding Hash value. Assuming that the storage resource corresponds to the process, and the quantity of the processes is 100, that is, the quantity of the storage resources in the edge computing network is 100, the modulo operation may be performed on 100 by the computed Hash value to obtain the remainder, and assuming that the remainder is 67, the second storage resource may be determined to be the storage resource corresponding to the process No. 67.

The stream number of the streaming media data is subjected to the Hash operation to obtain the Hash value, the Hash value is subjected to the modulo operation to obtain the remainder, and the remainder is used as the number corresponding to the second storage resource, thus realizing load balancing and balanced storage of the storage location information of the streaming media data on the storage resource.

In some embodiments, the edge computing network further includes a first gateway, and the first gateway may receive the streaming media data sent by the first client, determine the first edge node randomly and send the streaming media data to the first edge node.

As shown in Fig. 4, after receiving the streaming media data sent by the anchor side, the gateway of the anchor side (i.e., the first gateway) may transmit the streaming media data to one storage resource in the advanced edge CDN randomly. For example, the storage resource corresponds to the process, a random process number is determined to be 53 by a random operation, and if the process No. 53 is located on the streaming media server A, as shown in Fig. 4, the first gateway may send the streaming media data to the streaming media server A. Then, after the Hash operation and the modulo operation, the process number determined by the streaming media server A is 67, and if the process No. 67 is located on the streaming media server B, the streaming media server A may store the storage location information of the streaming media data in the storage resource corresponding to the process No. 67 on the streaming media server B, such that the streaming media server C may obtain the storage location information of the streaming media data from the storage resource corresponding to the process No. 67 on the streaming media server B.

The streaming media data is sent onto the edge node in the edge computing network randomly, and may be subjected to a load balancing processing operation.

In some embodiments, the edge computing network further includes a second gateway, and the second gateway may receive the request sent by the second client, determine the second edge node randomly and send the request to the second edge node.

As shown in Fig. 4, after receiving the request sent by the audience side, the gateway of the audience side (i.e., the second gateway) may transmit the request to one storage resource in the advanced edge CDN randomly. For example, the storage resource corresponds to the process, a random process number is determined to be 86 by a random operation, and if the process No. 86 is located on the streaming media server C, as shown in Fig. 4, the second gateway may send the request to the streaming media server C. Then, after the Hash operation and the modulo operation, the process number determined by the streaming media server C is 67, and if the process No. 67 is located on the streaming media server B, the streaming media server C may obtain the storage location information of the streaming media data from the storage resource corresponding to the process No. 67 on the streaming media server B, and if the streaming media data is stored on the streaming media server A, the streaming media data may be obtained from the streaming media server A.

The request is sent onto the edge node in the edge computing network randomly, and may be subjected to a load balancing processing operation.

In the embodiment of the present disclosure, the streaming media data sent by the first client is forwarded to the second client by the edge nodes in the edge computing network, thereby transmitting the streaming media data based on the edge computing network, realizing decoupling from the streaming media center, and improving the transmission efficiency of the streaming media data.

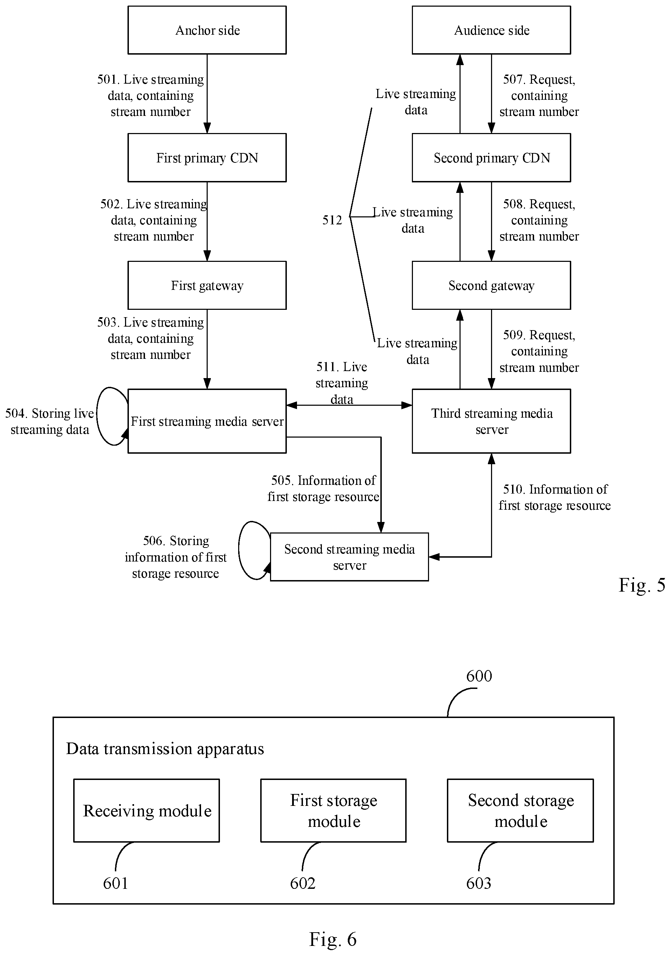

Fig. 5 is a schematic diagram according to a fifth embodiment of the present disclosure, the present embodiment provides a data transmission method, and takes a live scenario as an example, and corresponding streaming media data may be referred to as live streaming data, and the method includes the following steps.

In 501, an anchor side sends the live streaming data to a first primary CDN, the live streaming data including a stream number.

For differentiation, a primary edge CDN corresponding to the anchor side may be referred to as the first primary CDN, and a primary edge CDN corresponding to an audience side may be referred to as a second primary CDN.

In the present embodiment, for example, an edge computing network is a CDN, and the CDN may include a primary CDN and an advanced CDN.

In 502, the first primary CDN sends the live streaming data to a first gateway in the advanced CDN.

For differentiation, a gateway corresponding to the anchor side may be referred to as the first gateway, and a gateway corresponding to the audience side may be referred to as a second gateway.

In 503, after receiving the live streaming data, the first gateway randomly selects one storage resource in the advanced CDN, and sends the live streaming data to a streaming media server where the storage resource is located.

In the present embodiment, for example, an edge node in the edge computing network serves as the streaming media server.

The storage resource randomly selected in step 503 may be referred to as a first storage resource, and the streaming media server where the first storage resource is located may be referred to as a first streaming media server.

In 504, the first streaming media server stores the live streaming data sent by the first gateway.

The first streaming media server may store the live streaming data in the first storage resource on the first streaming media server.

In 505, the first streaming media server determines information of a second storage resource based on the stream number included in the live streaming data, and sends information of the first storage resource to the streaming media server corresponding to the information of the second storage resource.

The second storage resource is configured to store the information of the first storage resource.

A Hash operation and a modulo operation may be performed on the stream number, and assuming that the remainder after the operation is 67, a storage resource corresponding to process No. 67 may be referred to as the second storage resource, and the streaming media server where the second storage resource is located is the second streaming media server.

In 506, the second streaming media server stores the information of the first storage resource.

In 507, the audience side sends a request to the second primary CDN, the request being used for obtaining the live streaming data, and the request including a stream number of the to-be-obtained live streaming data.

In 508, the second primary CDN sends the request to a second gateway in the advanced CDN.

In 509, after receiving the request, the second gateway randomly selects one storage resource in the advanced CDN, and sends the request to a streaming media server where the storage resource is located.

The storage resource randomly selected in step 509 may be referred to as a third storage resource, and the streaming media server where the third storage resource is located may be referred to as a third streaming media server.

In 510, the third streaming media server determines the information of the second storage resource based on the stream number included in the live streaming data, and obtains the information of the first storage resource from the second storage resource in the second streaming media server based on the information of the second storage resource.

In 511, the third streaming media server obtains the live streaming data from the first storage resource in the first streaming media server based on the information of the first storage resource.

In 512, the third streaming media server sends the live streaming data to the audience side.

The third streaming media server may send the live streaming data to the audience side through the second gateway and the second primary CDN.

In the present embodiment, the live streaming data is stored onto the edge node in the edge computing network by the anchor side, the storage location information of the live streaming data is stored by the edge node in the edge computing network, the audience side obtains the above storage location information from the edge computing network, and the live streaming data is obtained based on the storage location information, thereby transmitting the live streaming data through the edge computing network, solving a transmission bottleneck caused by transmission through a streaming media center, and improving the transmission efficiency.

Fig. 6 is a schematic diagram according to a sixth embodiment of the present disclosure, which provides a data transmission apparatus. The apparatus is applied to a first edge node of an edge computing network. As shown in Fig. 6, the apparatus 600 includes: a receiving module 601, a first storage module 602 and a second storage module 603.

The receiving module 601 is configured to receive streaming media data sent by a first client; the first storage module 602 is configured to store the streaming media data onto a first storage resource; and the second storage module 603 is configured to store information of the first storage resource onto a second storage resource, both the first storage resource and the second storage resource being located in the edge computing network.

In the present embodiment, the streaming media data sent by the first client is stored onto the first storage resource of the edge computing network by the first edge node in the edge computing network, such that in a subsequent process, the streaming media data may be forwarded to a second client from the edge computing network, thereby transmitting the streaming media data based on the edge computing network, realizing decoupling from a streaming media center, and improving a transmission efficiency of the streaming media data.

In some embodiments, the streaming media data includes a streaming media identifier, and the second storage module 603 is specifically configured to: determine information of the second storage resource based on the streaming media identifier; and store the information of the first storage resource onto the second storage resource based on the information of the second storage resource.

In some embodiments, identification information is a stream number of the streaming media data, the information of the second storage resource is a number corresponding to the second storage resource, and the second storage module 603 is further specifically configured to: perform a Hash operation on the stream number to determine a Hash value corresponding to the stream number; and take a quantity of the storage resources in the edge computing network as a module, perform a modulo operation on the Hash value to obtain a remainder, and take the remainder as the number corresponding to the second storage resource.

In the embodiment of the present disclosure, the first edge node in the edge computing network stores the streaming media data sent by the first client onto the first storage resource, and stores the information of the first storage resource onto the second storage resource, such that in the subsequent process, a second edge node in the edge computing network acquires the streaming media data from the first storage resource and sends the streaming media data to the second client, thereby transmitting the streaming media data based on the edge computing network, realizing decoupling from the streaming media center, and improving the transmission efficiency of the streaming media data.

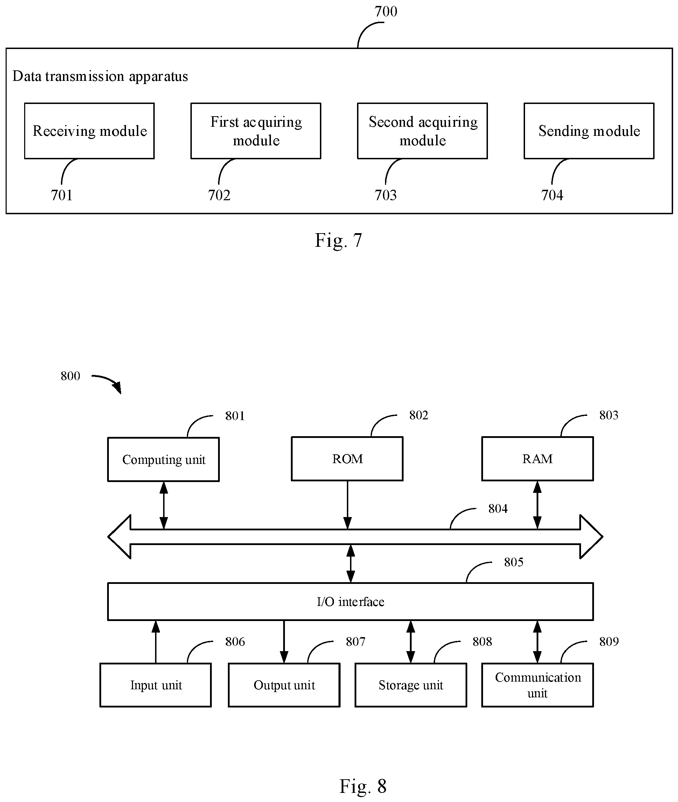

Fig. 7 is a schematic diagram according to a seventh embodiment of the present disclosure, which provides a data transmission apparatus. The apparatus is applied to a second edge node of an edge computing network. As shown in Fig. 7, the apparatus 700 includes: a receiving module 701, a first acquiring module 702, a second acquiring module 703 and a sending module 704.

The receiving module 701 is configured to receive a request sent by a second client for acquiring streaming media data; the first acquiring module 702 is configured to respond to the request to acquire information of a first storage resource from a second storage resource, the first storage resource being configured to store the streaming media data; the second acquiring module 703 is configured to acquire the streaming media data from the first storage resource based on the information of the first storage resource; and the sending module 704 is configured to send the streaming media data to the second client.

In the present embodiment, the second edge node in the edge computing network acquires the streaming media data from the first storage resource of the edge computing network, and sends the streaming media data to the second client, thereby transmitting the streaming media data based on the edge computing network, realizing decoupling from a streaming media center, and improving a transmission efficiency of the streaming media data.

In some embodiments, the request includes a streaming media identifier, and the first acquiring module 702 is specifically configured to: determine information of the second storage resource based on the streaming media identifier; and acquire the information of the first storage resource from the second storage resource based on the information of the second storage resource.

In some embodiments, the first acquiring module 702 is further specifically configured to: perform a Hash operation on a stream number to determine a Hash value corresponding to the stream number; and take a quantity of the storage resources in the edge computing network as a module, perform a modulo operation on the Hash value to obtain a remainder, and take the remainder as a number corresponding to the second storage resource.

In the embodiment of the present disclosure, the second edge node in the edge computing network acquires the information of the first storage resource, acquires the streaming media data from the first storage resource based on the information of the first storage resource, and sends the streaming media data the second client, thereby transmitting the streaming media data based on the edge computing network, realizing decoupling from the streaming media center, and improving the transmission efficiency of the streaming media data.

It may be understood that in the embodiments of the present disclosure, mutual reference may be made to the same or similar contents in different embodiments.

It may be understood that "first", "second", or the like, in the embodiments of the present disclosure are only for distinguishing and do not represent an importance degree, a sequential order, or the like.

According to the embodiment of the present disclosure, there are also provided an electronic device, a readable storage medium and a computer program product.

Fig. 8 shows a schematic block diagram of an exemplary electronic device 800 which may be configured to implement the embodiment of the present disclosure. The electronic device is intended to represent various forms of digital computers, such as laptop computers, desktop computers, workstations, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 8, the electronic device 800 includes a computing unit 801 which may perform various appropriate actions and processing operations according to a computer program stored in a read only memory (ROM) 802 or a computer program loaded from a storage unit 808 into a random access memory (RAM) 803. Various programs and data necessary for the operation of the electronic device 800 may be also stored in the RAM 803. The computing unit 801, the ROM 802, and the RAM 803 are connected with one other through a bus 804. An input/output (I/O) interface 805 is also connected to the bus 804.

The plural components in the electronic device 800 are connected to the I/O interface 805, and include: an input unit 806, such as a keyboard, a mouse, or the like; an output unit 807, such as various types of displays, speakers, or the like; the storage unit 808, such as a magnetic disk, an optical disk, or the like; and a communication unit 809, such as a network card, a modem, a wireless communication transceiver, or the like. The communication unit 809 allows the electronic device 800 to exchange information/data with other devices through a computer network, such as the Internet, and/or various telecommunication networks.

The computing unit 801 may be a variety of general and/or special purpose processing components with processing and computing capabilities. Some examples of the computing unit 801 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 801 performs the methods and processing operations described above, such as the data transmission method. For example, in some embodiments, the data transmission method may be implemented as a computer software program tangibly contained in a machine readable medium, such as the storage unit 808. In some embodiments, part or all of the computer program may be loaded and/or installed into the electronic device 800 via the ROM 802 and/or the communication unit 809. When the computer program is loaded into the RAM 803 and executed by the computing unit 801, one or more steps of the data transmission method described above may be performed. Alternatively, in other embodiments, the computing unit 801 may be configured to perform the data transmission method by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. An edge computing network (100), comprising:
a first edge node (101) configured to receive streaming media data sent by a first client, store the streaming media data onto a first storage resource, and store information of the first storage resource onto a second storage resource, both the first storage resource and the second storage resource being located in the edge computing network; and
a second edge node (102) configured to receive a request sent by a second client for acquiring the streaming media data, acquire the information of the first storage resource from the second storage resource, acquire the streaming media data from the first storage resource based on the information of the first storage resource, and send the streaming media data to the second client.

2. The network according to claim 1, further comprising:
a first gateway configured to receive the streaming media data sent by the first client; and determine the first edge node (101) randomly and send the streaming media data to the first edge node.

3. The network according to claim 1, further comprising:
a second gateway configured to receive the request sent by the second client; and determine the second edge node (102) randomly and send the request to the second edge node.

4. The network according to any one of claims 1 to 3,
wherein the first edge node (101) is further configured to determine information of the second storage resource based on a streaming media identifier comprised in the streaming media data using a first determination method;
the second edge node (102) is further configured to determine the information of the second storage resource based on the streaming media identifier comprised in the streaming media data using a second determination method; and
the first determination method is the same as the second determination method, preferably
identification information is a stream number of the streaming media data, the information of the second storage resource is a number corresponding to the second storage resource, and the first edge node (101) and the second edge node (102) are specifically configured to:
perform a Hash operation on the stream number to determine a Hash value corresponding to the stream number; and
take a quantity of the storage resources in the edge computing network as a module, perform a modulo operation on the Hash value to obtain a remainder, and take the remainder as the number corresponding to the second storage resource.

5. A data transmission method applied to a first edge node of an edge computing network, the method comprising:
receiving (201) streaming media data sent by a first client;
storing (202) the streaming media data onto a first storage resource; and
storing (203) information of the first storage resource onto a second storage resource, both the first storage resource and the second storage resource being located in the edge computing network.

6. The method according to claim5, wherein the streaming media data comprises a streaming media identifier, and the storing information of the first storage resource onto a second storage resource comprises:
determining information of the second storage resource based on the streaming media identifier; and
storing the information of the first storage resource onto the second storage resource based on the information of the second storage resource, preferably
identification information is a stream number of the streaming media data, the information of the second storage resource is a number corresponding to the second storage resource, and the determining information of the second storage resource based on the streaming media identifier comprises:
performing a Hash operation on the stream number to determine a Hash value corresponding to the stream number; and
taking a quantity of the storage resources in the edge computing network as a module, performing a modulo operation on the Hash value to obtain a remainder, and taking the remainder as the number corresponding to the second storage resource.

7. A data transmission method applied to a second edge node of an edge computing network, the method comprising:
receiving (301) a request sent by a second client for acquiring streaming media data;
responding (302) to the request to acquire information of a first storage resource from a second storage resource, the first storage resource being configured to store the streaming media data;
acquiring (303) the streaming media data from the first storage resource based on the information of the first storage resource; and
sending (303) the streaming media data to the second client.

8. The method according to claim 7, wherein the request comprises a streaming media identifier, and the acquiring information of a first storage resource from a second storage resource comprises:
determining information of the second storage resource based on the streaming media identifier; and
acquiring the information of the first storage resource from the second storage resource based on the information of the second storage resource, preferably
the determining information of the second storage resource based on the streaming media identifier comprises:
performing a Hash operation on a stream number to determine a Hash value corresponding to the stream number; and
taking a quantity of the storage resources in the edge computing network as a module, performing a modulo operation on the Hash value to obtain a remainder, and taking the remainder as a number corresponding to the second storage resource.

9. A data transmission apparatus (600) applied to a first edge node of an edge computing network, the apparatus comprising:
a receiving module (601) configured to receive streaming media data sent by a first client;
a first storage module (602) configured to store the streaming media data onto a first storage resource; and
a second storage module (603) configured to store information of the first storage resource onto a second storage resource, both the first storage resource and the second storage resource being located in the edge computing network.

10. The apparatus (600) according to claim 9, wherein the streaming media data comprises a streaming media identifier, and the second storage module (603) is specifically configured to:
determine information of the second storage resource based on the streaming media identifier; and
store the information of the first storage resource onto the second storage resource based on the information of the second storage resource, preferably
identification information is a stream number of the streaming media data, the information of the second storage resource is a number corresponding to the second storage resource, and the second storage module (603) is further specifically configured to:
perform a Hash operation on the stream number to determine a Hash value corresponding to the stream number; and
take a quantity of the storage resources in the edge computing network as a module, perform a modulo operation on the Hash value to obtain a remainder, and take the remainder as the number corresponding to the second storage resource.

11. A data transmission apparatus applied to a second edge node of an edge computing network, the apparatus comprising:
a receiving module configured to receive a request sent by a second client for acquiring streaming media data;
a first acquiring module configured to respond to the request to acquire information of a first storage resource from a second storage resource, the first storage resource being configured to store the streaming media data;
a second acquiring module configured to acquire the streaming media data from the first storage resource based on the information of the first storage resource; and
a sending module configured to send the streaming media data to the second client.

12. The apparatus according to claim 11, wherein the request comprises a streaming media identifier, and the first acquiring module is specifically configured to:
determine information of the second storage resource based on the streaming media identifier; and
acquire the information of the first storage resource from the second storage resource based on the information of the second storage resource, preferably
the first acquiring module is further specifically configured to:
perform a Hash operation on a stream number to determine a Hash value corresponding to the stream number; and
take a quantity of the storage resources in the edge computing network as a module, perform a modulo operation on the Hash value to obtain a remainder, and take the remainder as a number corresponding to the second storage resource.

13. An electronic device, comprising:
at least one processor; and
a memory connected with the at least one processor communicatively;
wherein the memory stores instructions executable by the at least one processor which, when executed by the at least one processor, enable the at least one processor to perform the method according to any one of claims 5 to 8.

14. A non-transitory computer readable storage medium storing computer instructions which, when executed by a computer, cause a computer to perform the method according to any one of claims 5 to 8.

15. A computer program product comprising a computer program which, when executed by a processor, implements the method according to any one of claims 5 to 8.
